# EUROPEAN PATENT APPLICATION

(11) **EP 4 729 152 A1**
(43) Date of publication of application: **22.04.2026**
(21) Application number: 24207115.7
(22) Date of filing: 17.10.2024
(51) Int. Cl.: B01D 46/00, B01D 46/10, B01D 46/52

(54) **FILTER ELEMENT AND METHOD FOR MANUFACTURING FILTER ELEMENT**

(71) Applicant: MANN+HUMMEL GmbH, 71636 Ludwigsburg (DE)
(72) Inventor: JESSBERGER, Thomas, 71636 Ludwigsburg (DE); WELLER, Benedikt, 71636 Ludwigsburg (DE); EVLEKLI, Coskun, 71636 Ludwigsburg (DE)
(74) Representative: Mann + Hummel Intellectual Property

(57) **Abstract**

A filter element (10) comprises a fold pack (2) comprising a flat filter medium (1) folded in a zigzag shape, the fold pack (2) further comprising upstream folds (2A) and downstream folds (2B), a frame element (3A, 3B, 4A, 4B) at least partially enclosing the fold pack (2), the frame element (3A, 3B, 4A, 4B) being attached to lateral fold profiles (5A, 5B) and end fold sections (6A, 6B) of the fold pack (2), a cover element (7) attached to the frame element (3A, 3B, 4A, 4B) thereby forming an interior volume (8) confined by the folded filter medium (1), the frame (3A, 3B, 4A, 4B) and the cover element (7), and a filling (14) comprising particulate adsorber material (9) within the interior volume (8) and covering at least partially a folding edge (15) of the upstream folds (2A) facing the cover element (7).

## Description

### Technical Field

This disclosure relates to a filter element and its manufacture. Even though applicable to arbitrary filter elements and filter assemblies, the present invention as well as the problems underlying it will be described in the following for an interior air filter of a motor vehicle.

The increasing air pollution, in particular in metropolitan cities, in connection with the use of modern air conditioning devices makes it necessary to purify by means of suitable filters the air guided from the exterior into the interior of a motor vehicle and processed or air-conditioned. For this purpose, for example, particle filters, odor filters or their combination with each other are conceivable which are to filter or adsorb as much as possible of the suspended substances, particles, and odors contained in the ambient air.

For filtering air for the interior of a motor vehicle, often folded or pleated filter materials, for example, filter nonwovens forming a fold pack, are used. For this purpose, an initially flat filter material sheet is folded in a zigzag shape. The fold pack is held, for example, by lateral strips and head strips or another frame. Such filter elements can be fixed in an exchangeable manner in a filter receptacle. The thus formed filter assembly can be installed in an air conditioning device of a corresponding motor vehicle.

Air conditioning systems for passenger compartments in electrically driven vehicles often draw in as little fresh air as possible, but instead recirculate and air condition the air in the passenger compartment. Recirculated air needs to be treated and cleaned to ensure passenger safety. In particular, carbon dioxide and humidity contained in the exhaled air may accumulate in the passenger compartment and can lead to concentration problems or even health problems for the occupants. In order to improve both safety and health aspects a reduction of undesired gas and particle content in the air is desired.

### Background Art

US 5,129,929 discloses a filter element combining a pleated particle filter medium and a sorbent filter pad for removing undesirable gases. The sorbent filter pad comprises a flat downstream and an upstream surface having a plurality of ridges with flat segments in between. The sorbent pad is combined with a pleated particle filter medium such that the ridges of the sorbent pad fit into hollow pleats on one face of the particle filter medium. The sorbent pad is a tangible body.

US 4,514,197 discloses a filter combining a particle filter medium and a sorbent filter medium. The filter includes a foam-type prefilter and a carbon-type main filter. The main filter holds activated carbon between a flat screen of mesh material and a corrugated screen of mesh material. The layer of activated carbon is contained in triangular-shaped segments limited by alternate crests of the corrugated screen attached to the flat screen.

US 5,354,365 discloses an air filter assembly combining a particle filter fabric and a sorbent material. A first layer of filter fabric is shaped into parallel elongated semi-cylindrical surfaces joined at common parallel edges to a second layer of filter fabric. Parallel semi-cylindrical voids between the fabric layers have a semi-elliptical cross-section and contain a gas sorbing material. U.S. Pat. No. 5,354,365 excludes a triangular design of the voids containing the sorbent.

US 5,423,903 discloses an air filter comprising a fine mesh screen and an air permeable fibrous cover that are added to the downstream side of a conventional air filter. An accordion-shaped filter element is located upstream of the fine mesh screen, and a granular filter material such as activated charcoal fills the space between the accordion-shaped filter element and the fibrous cover.

### Summary

It is an objective of the invention to provide an improved filter element.

According to a first aspect, a filter element is provided. The filter element comprises a fold pack comprising a flat filter medium folded in a zigzag shape, the fold pack further comprising upstream folds and downstream folds. The filter element further comprises a frame element at least partially enclosing the fold pack, the frame element being attached to lateral fold profiles and end fold sections of the fold pack. The filter element further comprises a cover element attached to the frame element, thereby forming an interior volume confined by the folded filter medium, the frame element, and the cover element. The filter element further comprises a filling comprising particulate adsorber material within the interior volume and covering at least partially a folding edge of the upstream folds facing the cover element. In embodiments, the filter element is an interior air filter element, e.g. for cleaning air of or for a passenger compartment in vehicle.

The suggested filter element may contain more particle filter material than conventional devices and at the same time remains relatively compact.

In embodiments, the interior volume is completely filled with particulate adsorber material, hence the interior volume is completely occupied by the filling. One may also contemplate embodiments, where the filling partially occupies the interior volume, e.g. to e predetermined part or fraction. A complete filling may lead to an improved mechanical stability or robustness of the entire filter element. Partial fillings may cater towards specific filter requirements with respect to weight, content of adsorber material, compressibility of the shape of the filter element. The suggested filter elements allow to balance adsorption efficiency and pressure drop along the fluid path through the filling.

In the following, the terms "adsorbent material" and "adsorber material" are used interchangeably.

The cover element is air permeable and ensures that the particulate adsorber material is enclosed within the filter element. In particular, the cover element is impermeable with respect to the used particulate adsorber material. In embodiments, the cover element can comprise several layers of materials. In embodiments, the cover element has also filtration properties like, for instance, filtering larger particles contained in a fluid to be filtered. The term fluid herein also refers to a fluid containing particles, e.g. a polluted fluid such as air contaminated with dust.

To obtain the fold pack, the flat filter medium can be provided as a starting material and correspondingly folded. In embodiments, the flat filter medium is implemented to withhold undesired particles from a fluid medium carrying the particles. The filter medium is, for example, a filter fabric, a laid filter, or a filter nonwoven. In particular, the filter material can be produced by a spun-bond or melt blown method. Furthermore, the filter medium can be felted or needled. The filter material can comprise natural fibers such as cotton or synthetic fibers, for example, or polyester, polyphenyl sulfide or polytetrafluoroethylene. The fibers can be oriented during production in, at a slant to and/or transversely to the machine direction. In embodiments, the filter material can be of a one-layer or multilayer configuration. It can furthermore contain an adsorption agent, for example, activated charcoal. Moreover, the filter material can comprise an antimicrobial and/or anti-allergenic action. As an antimicrobial substance, for example, zinc pyrithione or nanosilver, as an anti-allergenic substance, for example, polyphenol is conceivable.

The filter element combines withholding undesired particles from a fluid medium to be filtered, e.g. air for an interior cabin of a car or recirculated air, and at the same time removing gas components from the medium to be filtered, e.g. exhaled gases, undesired smells or exhaust gasses. There is no need to provide distinct filter devices.

The edges can be covered by the filling material. To this end, between the folding edges and the cover element facing those edges, there is space to hold the particulate filling material, i.e. an adsorber material. Extending the filling over the height of the fold pack allows for a flexible amount of filling.

One may deploy an available fold pack, attach a suitable frame element and the cover element for forming the filter element having an interior volume. The interior volume is then filled with adsorber material, e.g. in terms of a bulk material comprising adsorber particles.

In embodiments, the fold pack may have a height being a distance between two planes respectively resting on the folding edge and another folding edge of the downstream folds, the folding edge and the other folding edge having opposite orientations. The frame element may extend beyond the height in one or both directions. The distance between folding edges and the cover element provides for a suitable space for the filling in addition to the space within inter-fold regions, i.e. a space between folding sections. A frame element that extends beyond the height makes it possible to fill more adsorber material into the filter element compared to only filling the folds of the zigzag-shaped filter medium. The frame element may extend beyond the height in one or in both directions along the fluid stream.

The frame element, e.g., comprises a plurality of stabilization elements, in particular side bands and head bands which stabilize the filter material at least in sections in order to maintain its shape, in particular during its operation. The stabilization elements, in particular the side and head bands may form at least a part of the frame. Alternatively, one may contemplate of a monolithic frame structure surrounding the filter material, e.g. a plastic frame obtained through an injection mold process.

In one embodiment, the frame element comprises two side bands and two head bands which are fixedly attached, e.g. glued, to the fold pack, in particular by material fusion, and surround it in a frame shape and can function as seal sections. The side and head bands are formed e.g. of nonwoven material, in particular a filter nonwoven, filter fabric or laid filter. The nonwoven material of the side and head bands can have a reduced air permeability compared to the filter medium and/or a higher bending stiffness than the filter medium. In alternative embodiments, the filter medium forming the fold pack and the frame material is the same.

In embodiments, the frame element may comprise side bands attached to the lateral fold profiles, and head bands attached to the end fold sections, and the filter element may further comprise pockets formed by neighboring ones among the upstream folds, the side bands, and a plane resting on the folding edge, and the interior volume may comprise a first sub-volume between the plane and the upstream folds and a second sub-volume between the cover element and the plane.

The pockets may have the form of triangular prisms. More generally, they are formed as the convex hulls of the respective neighboring folds. The second sub-volume also contains at least some adsorption material. This enables the use of a greater amount of adsorber material than solely filling the first sub-volume.

In embodiments, the filling extends over the height of the fold pack as a cuboid-shaped or block-shaped sub-volume filled with particulate adsorber material on top of the fold pack which delimits prism-formed sub-volumes filled with particulate adsorber material. This design ensures that all air passing through the filter must traverse a minimum path of the adsorbent material through the thickness of the second sub-volume along the flow direction. This guarantees that every part of the air undergoes a consistent minimum level of filtration, preventing any portion from bypassing the adsorbent through gaps or thinner sections. A uniform flow-through thickness enhances the overall efficiency and effectiveness of the filtration process.

In embodiments, the filling further comprises other particulate adsorber material different than the particular adsorber material.

In embodiments, the number of adsorbent materials is greater than two, allowing for combining desired filter and/or adsorption properties of a plurality of different particulate adsorber materials.

In embodiments, different adsorbent materials are mixed or blended together. Combining different adsorbent materials in a filter in this way offers several advantages. By integrating multiple adsorbents, each with unique properties and affinities for various contaminants, the filter can effectively target a broader range of pollutants. This synergistic approach enhances the overall adsorption capacity and efficiency, as each material can capture specific types of molecules more effectively.

Additionally, a diverse pore structures and surface chemistries of the adsorbents that are mixed or blended together create a more complex and effective filtration matrix, reducing the likelihood of channeling and ensuring more uniform contact between the air and the adsorbent surfaces. This comprehensive filtration mechanism not only improves the removal of contaminants but also extends the operational lifespan of the filter, as the workload is distributed across different materials. Ultimately, the strategic integration of various adsorbents results in a more robust, versatile, and efficient filtration system.

In alterative embodiments, the other particulate adsorber material may be within the interior volume and cover at least partially the folding edge of the upstream folds, and the interior volume may comprise regions respectively containing the particulate adsorber materials and the other particulate adsorber material without mixing them. A region may refer to a distinct section or zone where a specific adsorbent material is utilized independently and locally separated from others. Regions can take various forms, such as layers, compartments, or segments. Additionally, unions of these zones, where multiple sections are combined but still distinct from other materials, are also considered regions. Combining regions of different adsorbent materials in a filter without mixing them, such as through layering or other configurations, offers several advantages. This approach allows each adsorbent to function independently, optimizing its specific properties to target different contaminants. By arranging adsorbents in separate regions, the filter can sequentially address various pollutants, enhancing overall filtration efficiency. This separation prevents potential negative interactions between different adsorbents, such as one material interfering with the performance of another. It also avoids issues where one adsorbent might degrade or dissolve another, ensuring the stability and effectiveness of each material. Additionally, this approach allows for a more controlled and predictable filtration process, as each adsorbent can be tailored to specific contaminants without compromising the performance of others.

In embodiments, there are pockets that contain more than one particulate adsorber material.

In embodiments, the filter element may further comprise another cover element attached to the frame element. The frame element may comprise side bands attached to the lateral fold profiles, and head bands attached to the end fold sections. The filter element may further comprise pockets formed by neighboring ones among the upstream folds, the side bands, and a plane resting on the folding edge, and other pockets formed by neighboring ones among the downstream folds facing the cover element, the side bands, and a plane resting on a folding edge of the downstream folds. The pockets contain the particulate adsorber material, and the other pockets contain the other particular adsorber material. For instance, there can be alternating fillings such that every second pocket is filled with the same adsorbents but adjacent pockets contain different adsorbent materials. The other cover element may be at least partially fixedly attached to the downstream folds of the fold pack.

In embodiments, at least two layers of adsorber materials in a direction between an upstream side and a downstream side of the fold pack may form regions. For instance, a conventional zigzag-shaped particle filter element with a frame could be filled with a first adsorbent and then with a second adsorbent thereby creating layers of adsorbents.

In embodiments the filling may comprise a bulk material, for instance activated charcoal, silica gel or the like. Bulk material refers to granular, powdery, or particulate substances characterized by their ability to flow and be handled without individual packaging. Bulk material can exhibit fluid-like behavior under certain conditions, it consists of solid particles that can flow and conform to the shape of their container, similar to how fluids behave. This flowability is due to the movement and rearrangement of individual particles within the bulk material.

In embodiments, the adsorber materials may be compacted. This compactification may be achieved by fixing the filling by means of glue, resin, paste or the like such that a flow of particulate is avoided. Compactification refers to the process of reducing the volume and increasing the density of a material by applying pressure, binding agents or other means. This process may reduce voids, rearrange particles into a tightly packed structure, and often reduces the material's flow properties. Key effects include increased density, enhanced mechanical strength, and reduced flowability. Nevertheless, a compactification of the filling is implemented such that the fluid medium to be filtered, e.g. air, still passes through the filling sufficiently.

In embodiments, the particulate adsorber material and the other particulate adsorber material are implemented to adsorb any one or any combination of gas components comprising carbon dioxide (CO₂), water (H₂O), volatile organic compounds (VOCs) such as benzene, toluene, and formaldehyde, nitrogen oxides (NO_{X}), sulfur dioxide (SO₂), ammonia (NH₃), hydrogen sulfide (H₂S), methane (CH₄), ozone (O₃), particulate matter (PM) including PM2.5 and PM10, heavy metals such as mercury (Hg) and lead (Pb), radon (Rn), chlorofluorocarbons (CFCs), polychlorinated biphenyls (PCBs), dioxins and furans, pathogenic microorganisms including bacteria, microbes, viruses, and fungi, aromatic hydrocarbons such as naphthalene and phenanthrene, polycyclic aromatic hydrocarbons (PAHs), silica dust, asbestos fibers, smells, liquids and fluids. These contaminants can be effectively removed using various adsorbent materials like, for instance, activated carbon, zeolites, silica gel, metal-organic frameworks (MOFs), and carbon nanotubes. This may be achieved by combining suitable adsorbent materials with suitable adsorption properties.

In embodiments, the filling may contain a carbon dioxide adsorber material and a humidity adsorber material, the humidity adsorber material being arranged downstream of the carbon dioxide adsorber material where downstream refers to the downstream direction in the adsorption mode described in the following paragraph. These embodiments have the advantage that in the regeneration mode (described in the following paragraph) when, for instance, air, having a predetermined regeneration temperature, flows in the opposite direction (opposite with respect to the air flow direction during in the adsorption mode), the adsorbed humidity supports the regeneration of the carbon dioxide adsorber material. The predetermined regeneration temperature triggers the adsorbent to release the adsorbed material into the ambient medium, e.g. hot air.

Adsorption is considered a process by which atoms, ions, or molecules from a gas, liquid, or dissolved solid adhere to a surface, forming a thin film of the adsorbate on the adsorbent. Desorption is considered a process by which atoms, ions, or molecules detach from a surface, reversing the adsorption process. This involves the adsorbate leaving the adsorbent surface, typically requiring energy to overcome the binding forces. For instance, by applying heat to the sorbent, the adsorbed substances can be released from the sorbent.

In an adsorption mode, the filter, in particular the particulate filling having adsorption/desorption properties, adsorbs different substances like carbon dioxide and/or water. In a desorption mode, the enriched substances can be released from the filter. Thereby, the filter can be regenerated. In the desorption mode, heat may be applied to the particle filter medium, in particular to the adsorbent. The desorption mode may also be referred to as regeneration mode.

In embodiments, the filter element may comprise an upstream cover element and a downstream cover element thereby forming an upstream interior volume and a downstream interior volume. Upstream and downstream interior volume may both contain particulate adsorber material. In embodiments, the upstream and downstream interior volume may contain different adsorber materials.

In embodiments, both, the upstream interior volume and the downstream interior volume, comprise a first and a second upstream / downstream sub-volume as described earlier. In embodiments, the volume of the filling of the upstream interior volume is greater than the first upstream sub-volume and/or the volume of the filling of the downstream interior volume is greater than the first downstream sub-volume.

In embodiments, the four different sub-volumes (first / second upstream / downstream sub-volume) contain different adsorber materials in the sense that not all sub-volumes have the same adsorber materials as the filling. This creates the advantages described above regarding the use of different adsorber materials and even improves upon them, since due to the two-sided filling (up- and downstream) more flexibility regarding the arrangement of the adsorbents is enabled. The two-sided use saves space as the voids of both sides of the fold pack can be used to store adsorber materials.

In embodiments, the cover element may be at least partially fixedly attached to the upstream folds of the fold pack. In embodiments, this may create different chambers within the interior volume. The stability of the filter element may be improved.

In embodiments, the fold pack may form an endless fold bellows, that is, the zigzag-shaped filter medium is bent such that the two end folds are connected, for instance by means of glue or the like, and the filter medium forms a cylindrical bellow. Accordingly in these embodiments the at least one cover element has a cylindrical form, too. This configuration allows for a radial flow, where air or fluid can move perpendicularly to the axis of the cylinder, passing through the folds. A cylindrical cover element can be positioned on the outside or inside of the bellows as part of a frame enclosing the adsorbent materials inside of the folds.

According to a second aspect, a filter element is provided. The filter element comprises a fold pack comprising a flat filter medium folded in a zigzag shape, the fold pack including upstream folds and downstream folds. A frame element encloses at least partially the fold pack, wherein the frame element is attached to lateral fold profiles and end fold sections of the fold pack. At least one cover element is attached to the frame element thereby forming an interior volume confined by the folded filter medium, the frame and the cover element. A filling within the interior volume comprises at least one particulate adsorber material.

According to a third aspect, a filter element is provided. The filter element comprises a fold pack comprising a flat filter medium folded in a zigzag shape, the fold pack including upstream folds and downstream folds. A frame element encloses at least partially the fold pack, wherein the frame element is attached to lateral fold profiles and end fold sections of the fold pack. At least one cover element is attached to the frame element thereby forming an interior volume confined by the folded filter medium, the frame and the cover element. A filling within the interior volume comprises at least two particulate adsorber materials.

According to a fourth aspect, a filter element is provided. The filter element comprises a fold pack comprising a flat filter medium folded in a zigzag shape, the fold pack including upstream folds and downstream folds. A frame element encloses at least partially the fold pack, wherein the frame element is attached to lateral fold profiles and end fold sections of the fold pack. An upstream and a downstream cover element is attached to the frame element thereby forming an upstream interior volume confined by the folded filter medium, the frame and the upstream cover element. And a downstream interior volume confined by the folded filter medium, the frame and the downstream cover element is formed. The upstream and downstream interior volumes comprise a filling comprising at least one particulate adsorber material.

According to a fifth aspect, a method of manufacturing the filter element according to any one of the described embodiments, is provided. The method comprises: providing the fold pack; attaching the frame element to the lateral fold profiles and the end fold sections of the fold pack, thereby at least partially enclosing the fold pack; placing the particulate adsorber material between the upstream folds as the filling such that the filling covers at least partially the folding edge of the upstream folds; and attaching the cover element to the frame element, thereby forming the interior volume confined by the folded filter medium, the frame element, and the cover element.

Optionally, the method further comprises filling a particulate adsorber material on top of the folds of the opposite side and attaching a cover element to the frame element on that side thereby enclosing the added particulate adsorber material between the folded filter medium, the frame and the cover element.

In embodiments, a conventional filter element with a zigzag-shaped flat filter medium for withholding particles and a frame can be used instead of the first method steps.

Further possible implementations or alternative solutions of the invention also encompass combinations - that are not explicitly mentioned herein - of features described above or below in regard to the embodiments. The person skilled in the art may also add individual or isolated aspects and features to the most basic form of the invention.

It is understood that features of embodiments disclosed above with respect to one aspect or below with respect to the drawings and claims may also be employed on connection with other aspects of this disclosure.

### Brief Description of Drawings

Further embodiments, features and advantages of the present invention will become apparent from the subsequent description and dependent claims, taken in conjunction with the accompanying drawings.
Fig. 1 is a schematic illustration of a motor vehicle with an interior air filter.
Fig. 2 shows a perspective view of a flat particle filter medium used in embodiments of disclosed filter elements.
Fig. 3 shows an exploded view of a filter element according to a first embodiment of a filter element.
Fig. 4 shows a perspective view of a fold pack comprising a particle filter medium folded in a zigzag shape.
Fig. 5 shows a perspective of a fold pack with attached head and side bands.
Fig. 6 shows a schematic section view of the first embodiment.
Fig. 7 shows a schematic section view of the first embodiment.
Figs. 8-11 show schematic section views of further embodiments of a filter element.
Fig. 12 shows a flow chart comprising method steps involved in a method for manufacturing a filter element.
Fig. 13 shows an exploded view of a filter element according to an alternative embodiment of a filter element.
Fig. 14 shows a perspective view of a filter element according to another alternative embodiment of a filter element.

In the figures, like or functional like element carry the same reference signs if not indicated otherwise.

### Description of Embodiments

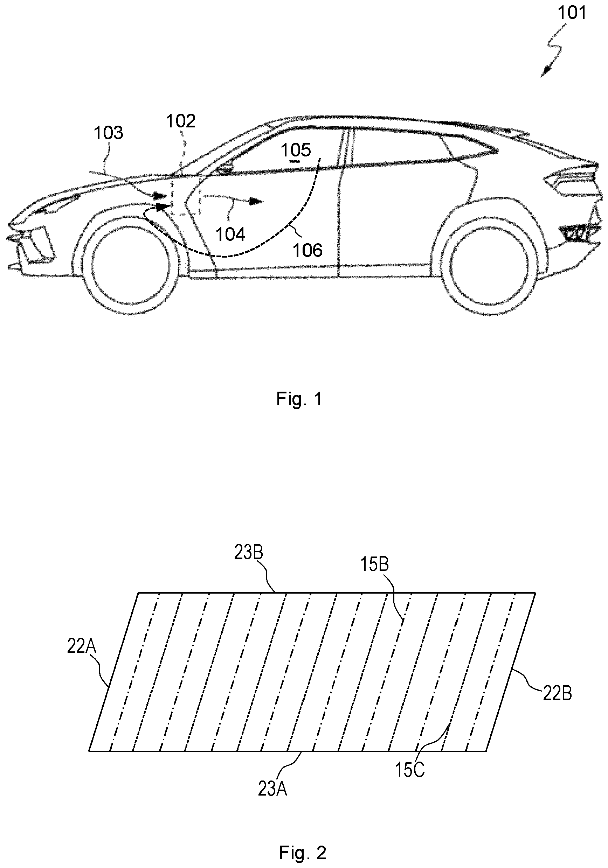

Fig. 1 shows a motor vehicle 101 with an air conditioning device comprising a filter element 102. For example, the air conditioning device can be designed as a heating/air conditioning device. The air conditioning device takes up external air 103 and guides it through a filter element 102 then releasing cleaned air 104 to a cabin or compartment 105 of the motor vehicle 101. In some operation modes, recirculated air needs to be filtered and is retrieved from the passenger compartment 105. The latter is indicated through the dashed arrow 106. The filtration is realized by means of a filter element 102 embodied as an interior air filter. The interior air filter 102 includes filter elements as depicted in the following with respect to the embodiments.

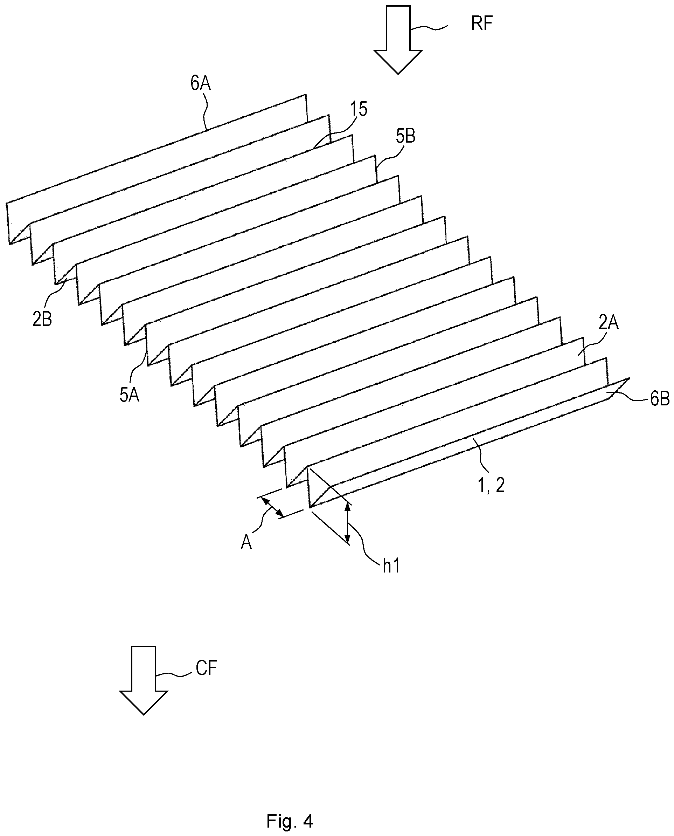

Fig. 2 shows a perspective view of a flat filter medium 1 in isolation and can be worked into a fold pack 2, e.g. as shown in Fig. 4 below. The filter material is, for example, a filter nonwoven, filter fabric, laid filter, or filter felt, in particular a needle felt. In particular, the filter medium 1 can be produced by a meltblown method. The filter material can comprise natural fibers such as cotton or synthetic fibers, for example, of polyester, polyphenyl sulfide, or polytetrafluoroethylene. The fibers can be stretched in a spatial direction. The filter material can be designed as a one-layer or multi-layer configuration.

An in particular open filter medium can be designed to remove particles of the test dust A4 according to ISO 12103-1 from an air flow with a filtration rate of 0.10 to 0.30 m/s, in relation to the filter medium surface, at an air permeability of greater than 3,000 l/m2s (determined according to ISO-9237 at 200 Pa). The determination of the filtration characteristics can be realized, for example, according to DIN 71460-1.

An in particular high-separation filter medium can be designed to remove particles of the test dust A2 according to ISO 12103-1 as well as NaCl aerosol particles according to DIN 71460-1 from an air flow with a filtration rate of 0.10 to 0.30 m/s, in relation to the filter medium surface, at an air permeability of greater than 600 l/m2s (determined according to ISO-9237 at 200 Pa). The determination of the filtration characteristics can be realized, for example, according to DIN 71460-1.

In embodiments, the filter medium is manufactured as a synthetic medium with multi-layer construction. A grammage of the filter material amounts to preferably 50-150 g/m2.

The filter medium corresponds preferably to an efficiency class of E10-14 according to DIN EN 1822-3 in the version at the filing date of this application.

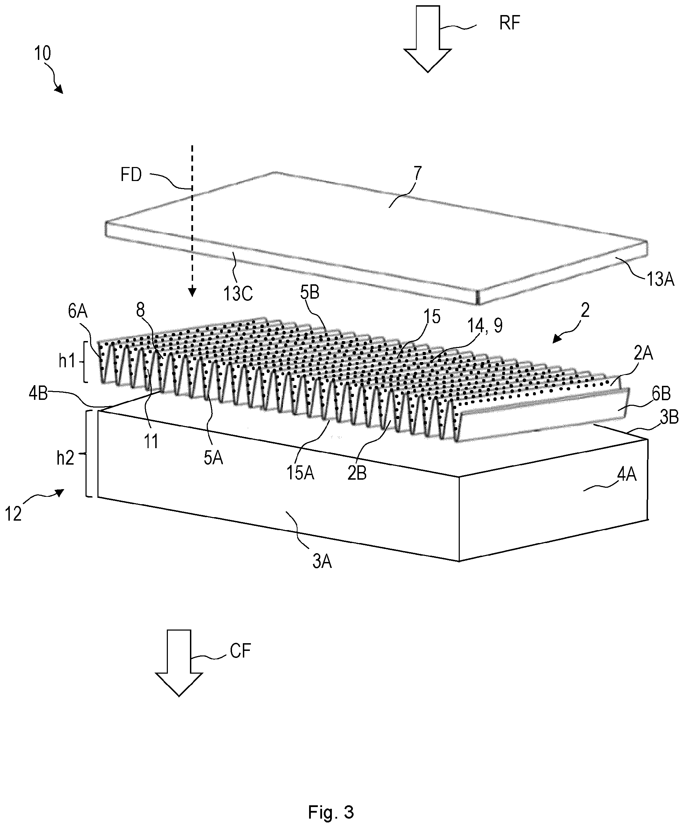

The flat filter medium 1 has a boundary comprising the peripheral edges 22A, 22B, 22C and 22D. For forming the fold pack 2, the flat filter medium is folded along the indicated dotted and dashed-dotted lines 15B, 15C which thereby become folding edges (15) and (15A) of opposite orientation in the fold pack 2 (see Fig. 4). The folds can be produced by means of folding along sharp edges or by a corrugated configuration of the filter medium 1. The filter element can be designed to be self-supporting, i.e., the resulting (by means of folding or the like) upstream 2A and downstream folds 2B of the fold pack as illustrated in Fig. 3 are shape-stable for an intended flow in filtration operation. In Fig. 4 the resulting fold pack is illustrated in more detail. Due to the folding, the fold lines 15B, 15C transform into folding edges 15, 15A.

Fig. 3 - 7 illustrate a filter element according to an embodiment showing different perspectives and section views of the embodiment or parts of the embodiment.

Fig. 3 shows an exploded view of a filter element 10 according to the first embodiment. A fold pack 2, obtained by folding a flat filter medium 1 as shown in Fig. 2, is positioned within a frame element 12 and covered by a cover element 7 with lateral flanges 13A, 13C. Fig. 3 shows arrow RF indicating raw fluid, e.g. air to be filtered, and arrow CF indicating clean fluid. In the orientation of Fig. 3, air to be cleaned or filtered flows from the top to the bottom of the page thereby defining an upstream and a downstream side of the filter element 10.

The filter element 10 comprises a fold pack 2 comprising a flat filter medium 1 folded in a zigzag shape, the fold pack 2 including upstream folds 2A and downstream folds 2B. The frame element 12 comprises side bands 3A, 3B and head bands 4A, 4B and encloses the fold pack 2, wherein the frame element 12 is attached to lateral fold profiles 5A, 5B and end fold sections 6A, 6B of the fold pack 2 (see Fig. 4). The cover element 7 is attached to the frame element thereby forming an interior volume confined by the folded filter medium (fold pack 2), the frame 12 and the cover element 7. The interior volume 8 is filled with an adsorber material 9 as depicted below.

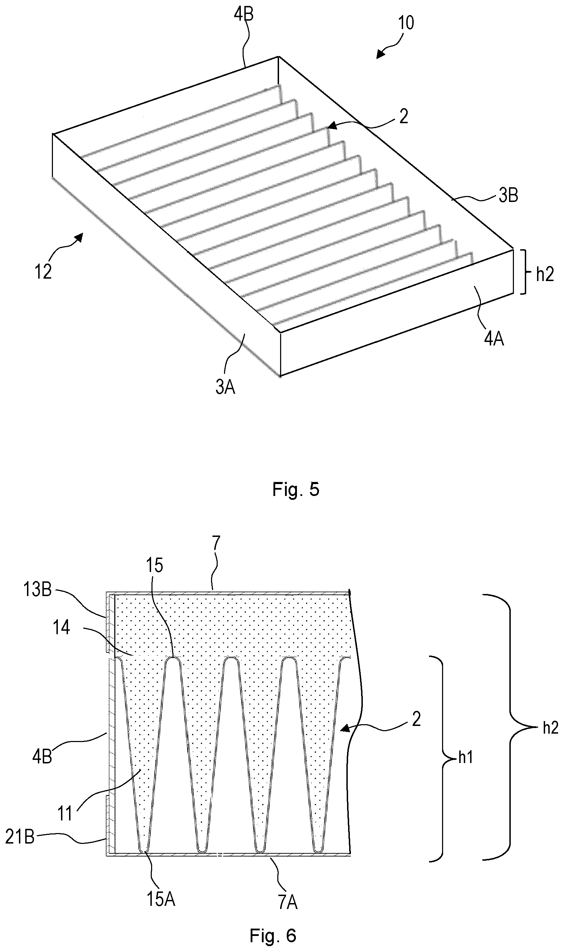

The fold pack 2 comprises upstream 2A and downstream folds 2B of opposite orientation. The folds 2A and 2B of the fold pack form pockets 11 (see Fig. 4 - 7). The upstream folds 2A together with side bands 3A and 3B and the cover element 7 form the interior volume 8. The interior volume 8 contains a filling 14 comprising particulate adsorber material 9 that covers at least one folding edge 15, i.e. there is filling 14 also outside of the pockets 11 (see also Fig. 6). The frame comprises opposite head bands 4A and 4B as well as opposite side bands 3A and 3B thereby forming the side surfaces of a cuboid.

The fold pack 2 has end fold sections 6A and 6B which are the two fold sections adjacent to the head bands 4A and 4B of the frame 12. The term fold section refers to the segment between two consecutive folding edges, or, for the end sections, between a respective fold edge and the respective end 22A or 22B of the fold pack. The lateral fold profiles 5A and 5B, which are perpendicular to the folding edges 15, are adjacent to the side bands 3A and 3B. The fold pack 2 has a height h1 given as the perpendicular distance from the base to the apex of one complete zigzag unit, where the zigzag unit is considered as, for instance, a triangle. The frame has a height h2 given as the length of the shorter side of the two sides of a head band (4A).

Fig. 4 shows the fold pack 2 in more detail, in particular a filter medium 1 folded along folding edges 15 and 15A to a fold pack 2 is illustrated comprising upstream 2A and downstream folds 2B. Upstream folds are the sections of a fold pack that are enclosed between two adjacent folding edges, with these edges oriented against the flow direction of the raw fluid. Similarly, downstream folds are the sections of a fold pack 2 that are enclosed between two adjacent folding edges, with these edges oriented in the flow direction of the raw fluid RF. The fold pack 2 has a height h1 as described above. It has lateral fold profiles 5A and 5B formed in a zigzag shape. The two outermost fold sections of the fold pack 2 are the two end fold sections 6A and 6B. The upstream and downstream folds 2A and 2B can be produced by means of folding along sharp folding edges or by corrugation of the filter medium 1. Folding in which the folds have a varying height would be possible, too. Moreover, the fold distance A between respective folding edges 15 of identical fold orientation can vary within an embodiment and also between different embodiments.

The filter medium 1 can be designed to be self-supporting, i.e., the folds are shape-stable for an intended flow in orientation operation. The filter medium 1 is delimited by end fold sections 6A and 6B. The flat filter medium 1 that is illustrated in Fig. 2 has a rectangular shape. However, also a triangular, pentagonal, or polygonal, or round or oval shape are conceivable.

In variants, the fold distance is less than 5 mm. Conceivable is an embodiment of the filter element as HEPA filter. A material thickness of the filter medium 1, in particular of a HEPA filter material, is between 0.2 mm and 1 mm, for example. In other embodiments, also significantly thicker filter materials 1 can be used, for example, so-called combination filter media which comprise, in addition to at least one particle filter layer, a gas adsorption filter layer. The thickness can amount here to up to 2 mm or even up to 3 mm. Correspondingly, also the fold distances are to be selected larger, in particular larger than 5 mm.

Fig. 5 shows the filter element 10 without cover and filling for illustrating the available interior volume for the filling. The fold pack 2 is placed within the frame 12. The frame 12 encapsulates the fold pack 2 within a three-dimensional boundary that conforms to a rectangular prism, providing structural support and defining spatial limits of the filter element. The frame 12 comprises opposite side bands 3A and 3B and opposite head bands 4A and 4B. The frame has a height h2 that extends beyond the height h1 of the fold pack 2. For producing a filter element, a circumferential frame element is attached to the fold pack 2. For instance, side bands 3A and 3B are attached to the lateral fold profiles 5A and 5B and head bands 4A and 4B are attached to the end fold sections 6A and 6B. This can be done by means of glue, welding or the like. In embodiments, auxiliary materials to ensure a secure bond are used, particularly but not exclusively at the thin lateral fold profiles 5A, 5B. These auxiliary materials may include reinforcing strips, bonding agents, or support structures to enhance adhesion and stability.

Next the aspect of filling the interior volume of the filter element is described in more detail.

Fig. 6 shows a partial cross-sectional view of the filter element 10 illustrated in Fig. 3 - 7 where a fold pack 2 is positioned within a frame 12 comprising a cover element 7, an optional cover element 7A and a head band 4B. The cover elements 7 and 7Aare attached to the head bands and side bands and may be partially attached to the fold pack. This can be done by means of glue, welding or the like. In embodiments, auxiliary materials to ensure a secure bond are used. These auxiliary materials may include reinforcing strips, bonding agents, or support structures to enhance adhesion and stability. The fold pack 2 has been folded along the folding edges 15, thereby forming pockets 11. Particulate adsorber 9 material is positioned between the folds 2A facing the cover element 7, the head band 4B and the cover element 7. The filling 14 comprises particulate adsorber material 9 that covers folding edges 15. The fold pack 2 has a height h1 and the frame has a height h2 where h2 is greater than h1.

It is appreciated that the entire interior volume between the upstream cover 7 and the fold pack 2 is occupied by the filling 14 (dotted area). The filling 14, e.g. compacted bulk material having adsorption properties, extends on or above the folding edges 15 facing the cover 7. The cover 7 is fixedly attached to the frame (side band 4B in Fig. 6) through lateral protruding flanges 13B and seals the interior with regard to the particulate filling 14. The same holds for the optional downstream cover element 7A with respect to the flange 21B.

In operation, the air to be filtered passes at least through the region above the folds or pockets 11. Therefore, a minimum flow path having the length h2 - h1 is achieved along which undesired gaseous components are removed from the air.

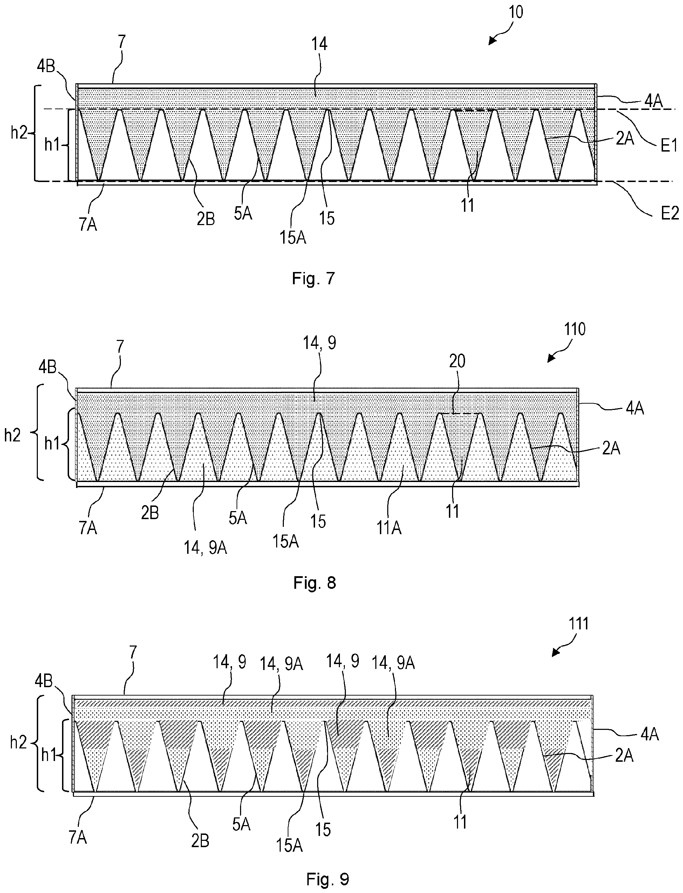

Fig. 7 shows an extended cross-sectional view of the embodiment illustrated in Fig. 6. The fold pack 2 is positioned within a rectangular frame 12 comprising a cover element 7, an optional cover element 7A and head bands 4A and 4B. The filling 14 comprising particulate adsorber material 9 fills the space between the upstream folds 2A, the head bands 4A and 4B and the cover element 7 to a large extent. The fold pack 2 is folded along folding edges 15 and 15A. The zigzag shaped upstream 2A and downstream folds 2B form pockets 11. In the perspective of Fig. 7, the zigzag shaped lateral fold profile 5A is depicted in the front view of the drawing plane. Two planes E1 and E2 are depicted as dashed lines resting on folds of different orientations respectively. E1 separates the entire upstream interior volume into a first sub-volume (above E1, upstream with respect to the filter medium) and a second sub-volume (below E1, upstream with respect to the filter medium). The embodiment shows both sub-volumes to be filled with the adsorber material.

Fig. 8 shows a second embodiment of a filter element 110 and differs from Fig. 7 in the following aspects: In Fig. 8 the filling 14 comprises an additional particulate adsorber material 9A that fills the space between the downstream folds 2B, the head bands 4A and 4B, side bands (not shown) and the cover element 7A which in this embodiment is non-optional. The two different filling materials 9, 9A allow for a sequential adsorption along the flow path of the air. Further, the available space within the frame 4A, 4B and cover 7, 7A is efficiently used for the adsorption of undesired gases.

To illustrate different adsorber materials 9 and 9A different dot or line patterns are used in Fig. 8 - 11. In embodiments, the particulate adsorber materials 9 and 9A are of the same material.

Fig. 9 shows a third embodiment of a filter element 111 and differs from Fig. 7 in the following aspects: Two different adsorber materials 9 and 9A are used instead of one. In the illustrated third embodiment, these adsorbents are arranged in alternating layers indicated by different textures. Each pocket 11 contains two different adsorber materials 9 and 9A and furthermore the filling that is positioned outside of the pockets comprises the two different adsorbent materials 9 and 9A, too. The used adsorbents can comprise activated charcoal and Zeolites. Activated carbon is well suited for adsorbing organic compounds and odors, while zeolites are effective for trapping smaller molecules like ammonia and nitrogen oxides. However, in a different embodiment the adsorbents can comprise silica gel and activated alumina. Silica gel is effective at adsorbing moisture, and activated alumina can adsorb a variety of gases and vapors, including fluoride and sulfur compounds. In yet another embodiment, the used adsorbents can comprise carbon nanotubes and metal-organic frameworks (MOFs). Carbon nanotubes offer high surface area and good adsorption properties regarding various pollutants, while MOFs can be tailored to target specific gases.

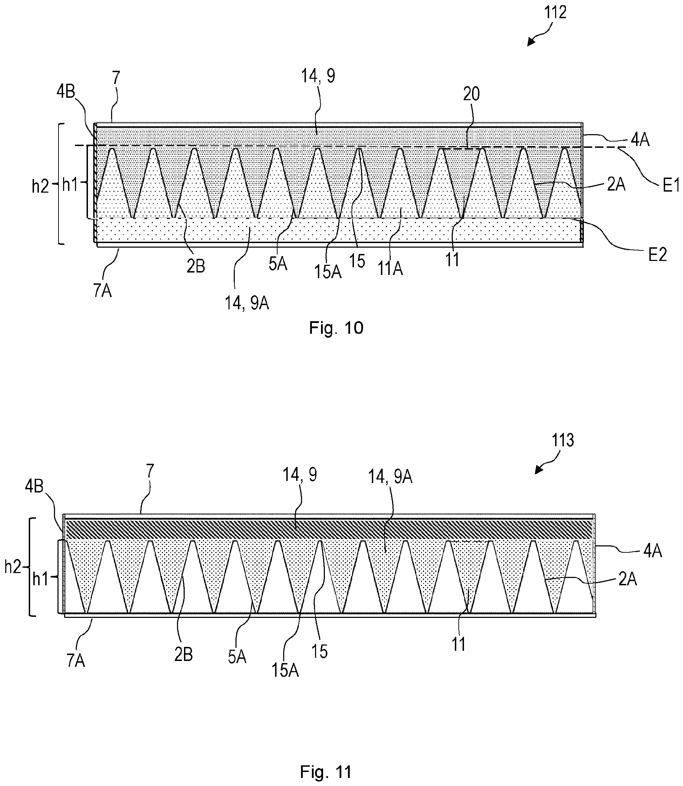

Fig. 10 shows a fourth embodiment of a filter element 112 and differs from Fig. 8 in that the height h2 of the frame 12 extends beyond the height h1 of the fold pack 2 in both directions. Thereby the space available for the filling 14 on the downstream side is increased.

Fig. 11 shows a fifth embodiment of a filter element 113 and differs from Fig. 9 in the following aspects: The filling 14 inside the pockets 11 and 11A comprises only one particulate adsorber material 9A and the filling 14 outside the pockets 11 comprises only one (but different) particulate adsorber material 9.

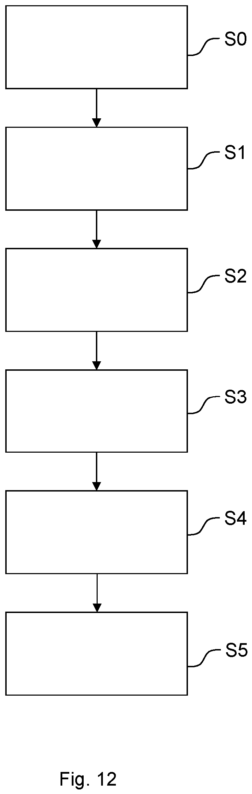

Fig. 12 illustrates an example for a method for manufacturing a filter element, e.g. any one of the before-disclosed embodiments. First, in step S0 a flat filter medium 1 is folded in a zigzag shape thereby creating a fold pack 2. As noted above, the folds can be produced by means of folding along sharp edges or by a corrugated configuration of the flat filter medium 1.

S1 refers to a method step of providing the fold pack 2, for instance the one produced in S0. The fold pack 2 is a flat filter medium 1 folded in a zigzag shape, the fold pack 2 including upstream folds 2A and downstream folds 2B.

S2 refers to a method step of attaching a frame 12 to the fold pack 2. This can comprise attaching frame elements 3A, 3B, 4A, 4B to the lateral fold profiles 5A, 5B and end fold sections 6A, 6B of the fold pack, thereby at least partially enclosing the fold pack 2 (see Figs. 4 and 5).

Next, in step S3 putting a particulate adsorber material 9 between folds 2A as a filling is performed. In particular the filling 14 covers at least partially a folding edge of the folds.

Then, in step S4 a cover element 7 is attached to the frame (elements 3A, 3B, 4A, 4B) thereby forming an interior volume confined by the folded filter medium, the frame 12 (3A, 3B, 4A, 4B) and the cover element 7.

S5 refers to an optional method step of filling a particulate adsorber material on top of the folds of the opposite side and attaching a cover element to the frame element on that side thereby enclosing the added particulate adsorber material between the folded filter medium, the frame and the cover element. This leads to the configuration of a filter element shown in Fig. 8 or 10.

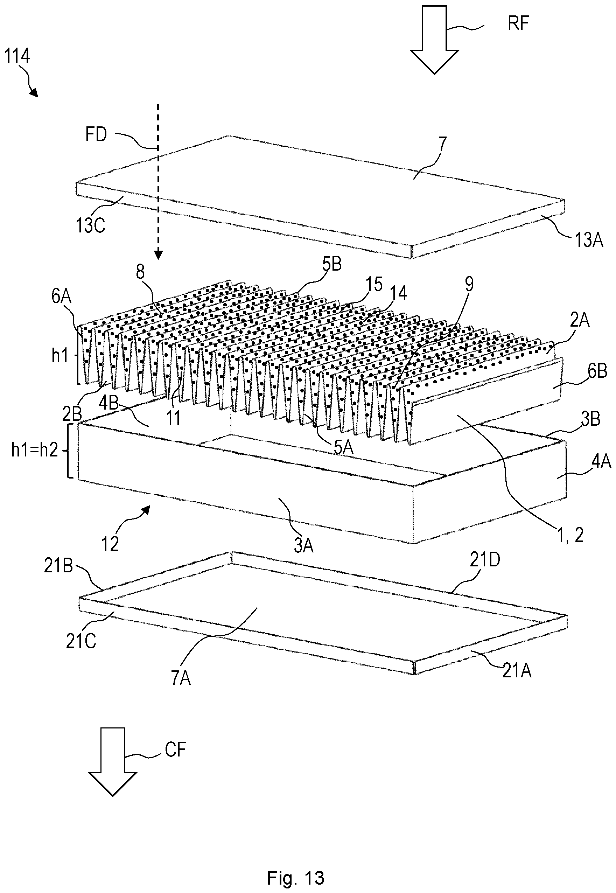

Fig. 13 shows an exploded view of an alternative embodiment for a filter element 114 and differs from Fig. 3 in the following aspects: The height h1 of the fold pack 2 equals the height h2 of the frame 12. Also Fig. 13 illustrates a downstream cover element 7A, comprising protruding flanges 21A, 21B, 21C and 21D. The filling can be embodied upstream and/or downstream from the fold pack 2 and may include one or more adsorber materials.

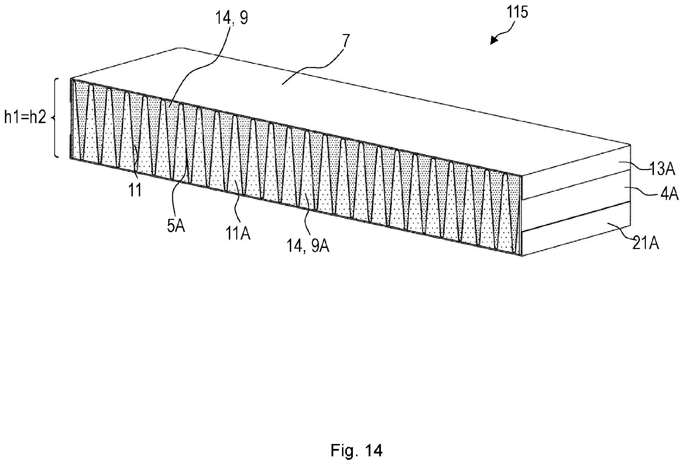

Fig. 14 illustrates another alternative embodiment for a filter element 115 that differs from the embodiment illustrated in Fig. 13 in that in Fig. 14 pockets 11 and 11Aof both sides (upstream and downstream) have a filling 14, in particular, comprising different particulate adsorber materials 9 and 9A.

### Reference Signs List

- 1: flat filter medium
- 2: fold pack
- 2A: upstream folds
- 2B: downstream folds
- 3A: side band
- 3B: side band
- 4A: head band
- 4B: head band
- 5A: lateral fold profile
- 5B: lateral fold profile
- 6A: end fold section
- 6B: end fold section
- 7: cover element
- 7A: cover element
- 8: interior volume
- 9: particulate adsorber material
- 9A: particulate adsorber material
- 10: filter element
- 11: pocket
- 11A: pocket with different orientation compared to 11
- 12: frame
- 13A: protruding flange
- 13B: protruding flange
- 13C: protruding flange
- 14: filling
- 15: folding edge
- 15A: folding edge
- 15B: fold line
- 15C: fold line
- 20: dashed line enclosing pocket
- 21A: protruding flange
- 21B: protruding flange
- 21C: protruding flange
- 21D: protruding flange
- 22A: peripheral edge of filter medium
- 22B: peripheral edge of filter medium
- 23A: peripheral edge of filter medium
- 23B: peripheral edge of filter medium
- 101: motor vehicle
- 102: filter element
- 103: external air
- 104: cleaned air
- 105: cabin of motor vehicle
- 106: air flow of recirculated air
- 110: filter element
- 111: filter element
- 112: filter element
- 113: filter element
- 114: filter element
- 115: filter element
- E1: plane resting on folds
- E2: plane resting on folds
- RF: raw fluid
- CF: cleaned fluid
- FD: flow direction
- A: width between folding edges
- h1: height of fold pack
- h2: height of frame

## Claims

1. A filter element (10) comprising:
a fold pack (2) comprising a flat filter medium (1) folded in a zigzag shape, the fold pack (2) further comprising upstream folds (2A) and downstream folds (2B);
a frame element (3A, 3B, 4A, 4B) at least partially enclosing the fold pack (2), the frame element (3A, 3B, 4A, 4B) being attached to lateral fold profiles (5A, 5B) and end fold sections (6A, 6B) of the fold pack (2);
a cover element (7) attached to the frame element (3A, 3B, 4A, 4B), thereby forming an interior volume (8) confined by the folded filter medium (1), the frame element (3A, 3B, 4A, 4B), and the cover element (7); and
a filling (14) comprising particulate adsorber material (9) within the interior volume (8) and covering at least partially a folding edge (15) of the upstream folds (2A) facing the cover element (7).

2. The filter element (10) of claim 1, wherein the fold pack has a height (h) being a distance between two planes (E1) and (E2) respectively resting on the folding edge (15) and another folding edge (15A) of the downstream folds (2B), the folding edge (15) and the other folding edge (15A) having opposite orientations, and
the frame element (3A, 3B, 4A, 4B) extends beyond the height (h).

3. The filter element (10) of claim 1, wherein the frame element (3A, 3B, 4A, 4B) comprises side bands (3A, 3B) attached to the lateral fold profiles (5A, 5B), and head bands (4A, 4B) attached to the end fold sections (6A, 6B),
the filter element (10) further comprises pockets (11) formed by neighboring ones among the upstream folds (2A), the side bands (3A) and (3B), and a plane (E1) resting on the folding edge (15), and
the interior volume (8) comprises a first sub-volume between the plane (E1) and the upstream folds (2A), and a second sub-volume between the cover element (7) and the plane (E1).

4. The filter element (10) of any one of claims 1 - 3, wherein the filling (14) further comprises other particulate adsorber material (9A) different than the particulate adsorber material (9).

5. The filter element (10) of claim 4, wherein the other particulate adsorber material (9A) is within the interior volume (8) and covers at least partially the folding edge (15) of the upstream folds (2A), and
the interior volume (8) comprises regions respectively containing the particulate adsorber material (9) and the other particulate adsorber material (9A).

6. The filter element (10) of claim 4, further comprising another cover element (7A) attached to the frame element (3A, 3B, 4A, 4B),
wherein the frame element (3A, 3B, 4A, 4B) comprises side bands (3A, 3B) attached to the lateral fold profiles (5A, 5B), and head bands (4A, 4B) attached to the end fold sections (6A, 6B),
wherein the filter element (10) further comprises:
pockets (11) formed by neighboring ones among the upstream folds (2A), the side bands (3A) and (3B), and a plane (E1) resting on the folding edge (15); and
other pockets (11A) formed by neighboring ones among the downstream folds (2B) facing the cover element (7A), the side bands (3A) and (3B), and a plane (E2) resting on another folding edge (15A) of the downstream folds (2B), and
the pockets (11) contain the particulate adsorber material (9), and the other pockets (11) contain the other particulate adsorber material (9A).

7. The filter element (10) of claim 6, wherein the fold pack has a height (h) being a distance between two planes (E1) and (E2) respectively resting on the folding edge (15) and the other folding edge (15A) of the downstream folds (2B), the folding edge (15) and the other folding edge (15A) having opposite orientations, and
the frame element (3A, 3B, 4A, 4B) extends beyond the height (h) in both directions.

8. The filter element (10) of -claim 6, wherein the other cover element (7A) is at least partially fixedly attached to the downstream folds (2B) of the fold pack (2).

9. The filter element (10) of any one of claims 4 to 8, wherein the particulate adsorber material (9) and the other particulate adsorber material (9A) are compacted.

10. The filter element (10) of any one of claims 4 to 9, wherein the particulate adsorber material (9) and the other particulate adsorber material (9A) are implemented to adsorb any one or any combination of gas components comprising carbon dioxide, water, hydrocarbons, VOCs, smells, microbes, and liquids.

11. The filter element (10) of any one of preceding claims, wherein the filling (14) comprises bulk material.

12. The filter element (10) of any one of preceding claims, wherein the filling (14) contains a carbon dioxide adsorber material and a humidity adsorber material, the humidity adsorber material being arranged downstream of the carbon dioxide adsorber material.

13. The filter element (10) of any one of preceding claims, wherein the cover element (7) is at least partially fixedly attached to the upstream folds (2A) of the fold pack (2).

14. The filter element (10) of any one of preceding claims, wherein the fold pack (2) forms endless fold bellows.

15. A method of manufacturing the filter element (10) according to any one of preceding claims, the method comprising:
providing the fold pack (2);
attaching the frame element (3A, 3B, 4A, 4B) to the lateral fold profiles (5A, 5B) and the end fold sections (6A, 6B) of the fold pack (2), thereby at least partially enclosing the fold pack (2);
placing the particulate adsorber material (9) between the upstream folds (2A) as the filling (14) such that the filling (14) covers at least partially the folding edge (15) of the upstream folds (2A); and
attaching the cover element (7) to the frame element (3A, 3B, 4A, 4B), thereby forming the interior volume (8) confined by the folded filter medium (1), the frame (3A, 3B, 4A, 4B), and the cover element (7).
